# EUROPÄISCHE PATENTSCHRIFT

(11) **EP 3 241 659 B1**
(45) Veröffentlichungstag und Bekanntmachung des Hinweises auf die Patenterteilung: **05.12.2018**
(21) Anmeldenummer: 17159634.9
(22) Anmeldetag: 07.03.2017
(51) Int. Cl.: B29C 45/28

(54) **VORRICHTUNG ZUM EINSPRITZEN VERNETZBARER POLYMERE IN EINEN FORMRAUM**
DEVICE FOR INJECTING CROSSLINKABLE POLYMERS INTO A MOULDING CHAMBER
DISPOSITIF D'INJECTION DE POLYMÈRES RÉTICULABLES DANS UN ESPACE DE MOULE

(30) Priorität: 06.05.2016 AT 504152016
(43) Veröffentlichungstag der Anmeldung: 08.11.2017
(73) Patentinhaber: ebner tec gmbh, 4493 Wolfern (AT); ebner-tec Solution GmbH, 4493 Wolfern (AT)
(72) Erfinder: Ebner, Willibald, 4493 Wolfern (AT); Stangl, Peter, 4493 Wolfern (AT)
(74) Vertreter: Patentanwaltskanzlei Hübscher

(56) Entgegenhaltungen:
- JP-A- 2009 279 871
- US-A- 5 948 450
- US-B1- 6 743 009

## Beschreibung

Die Erfindung bezieht sich auf eine Vorrichtung zum Einspritzen vernetzbarer Polymere in einen Formraum mit einem eine Austrittsöffnung bildenden Düsenkörper, mit einer den Düsenkörper durchsetzenden Düsennadel, die zwischen einer die Austrittsöffnung verschließenden Schließstellung und einer durch einen Anschlag für den Öffnungshub begrenzten Offenstellung axial verlagerbar ist, und mit einem Stelltrieb für den Anschlag mit einer quer zur Achse der Düsennadel verlaufenden Stellachse.

Bei Spritzgussformwerkzeugen mit Düsen, die mit einem Nadelverschluss versehen sind, ist es bekannt (EP 1 477 292 A1), die Offenstellung der Düsennadel und damit die Durchflussrate der aus der Austrittsöffnung des Düsenkörpers in den Formraum strömenden und dort vernetzenden Polymere in Anpassung an die jeweiligen Anforderungen einstellbar auszuführen. Zu diesem Zweck wird ein den Öffnungshub der Düsennadel begrenzender Anschlag in Form eines Keils oder Kegels vorgesehen, der senkrecht zur Stellachse der Düsennadel durch einen Stelltrieb verlagert wird, wodurch sich die durch die Keil- oder Kegelfläche gebildete Begrenzung des Öffnungshubs für die Düsennadel entsprechend den jeweiligen Anforderungen einstellen lässt. Vorteilhaft ist, dass durch den quer zur Stellachse der Düsennadel verlaufenden Stelltrieb für den keil- oder kegelförmigen Anschlag ein einfacher Zugang für eine Anschlageinstellung von Hand aus geschaffen wird. Nachteilig ist neben dem Konstruktionsaufwand allerdings, dass die für eine genaue Einstellung der Offenstellung der Düsennadel geforderten, engen Toleranzen kaum eingehalten werden können.

Ähnlich Nachteile treten auch bei einer anderen bekannten Nadelverschlussdüse auf (EP 2 952 326 A1), bei der der Anschlag zur Begrenzung des Öffnungshubs durch eine Kugel gebildet wird, zu deren Verlagerung in Richtung der Achse der Düsennadel ein quer zur Düsenachse verlaufender Stelltrieb vorgesehen ist, der eine in einer Umlenkführung verschiebbar gelagerte Kugelreihe beaufschlagt, deren vom Stelltrieb abgekehrte Endkugel den Anschlag bildet.

Der Erfindung liegt somit die Aufgabe zugrunde, Die Einstellung des Öffnungshubs einer Nadelverschlussdüse so auszugestalten, dass mit vergleichsweise einfachen Konstruktionsmaßnahmen eine vorteilhafte, genaue Begrenzung des Öffnungshubs der Düsennadel sichergestellt werden kann.

Ausgehend von einer Vorrichtung der eingangs geschilderten Art löst die Erfindung die gestellte Aufgabe dadurch, dass der Anschlag um eine senkrecht zur Achse der Düsennadel und senkrecht zur Stellachse des Stelltriebs verlaufende Drehachse schwenkbar gelagert ist und neben einer Anschlagfläche für den Öffnungshub eine winkelversetzte Kupplungsfläche für den Stelltrieb aufweist und dass die Anschlagfläche und die Kupplungsfläche des Anschlags mit ihren jeweiligen Gegenflächen eine Nockensteuerung im Sinne eines vom Drehwinkel des Anschlags unabhängigen, konstanten Übersetzungsverhältnisses zwischen dem Stellweg des Stelltriebs und der anschlagbedingten Verstellung des Öffnungshubs zur Begrenzung der Offenstellung der Düsennadel bilden.

Durch das Vorsehen eines Anschlags, der um eine senkrecht zur Achse der Düsennadel und senkrecht zur Stellachse des Stelltriebs verlaufende Drehachse schwenkbar gelagert ist, werden einfache Konstruktionsvoraussetzungen für die Anschlagverstellung geschaffen. Es muss lediglich berücksichtigt werden, dass aufgrund der Drehbewegung des Anschlags selbst bei übereinstimmenden Stellwegen der Anschlagfläche und der dazu winkelversetzten Kupplungsfläche in Umfangsrichtung der diese Verlagerung der Anschlag- und Kupplungsflächen bestimmende Stellweg des Stelltriebs in keinem linearen Verhältnis zu einem von der Anschlagfläche abgeleiteten Stellweg in Richtung der Düsennadelachse steht. Sowohl die lineare Stellbewegung des Stelltriebs und die davon über die Kupplungsfläche abgeleitete Drehbewegung des Anschlags als auch die Drehbewegung der Anschlagfläche und die davon abgeleitete lineare Bewegung zur Begrenzung des Öffnungshubs sind miteinander durch Winkelfunktionen verknüpft. Dies bedeutet, dass zwischen der Anschlagfläche und der Kupplungsfläche einerseits und den mit diesen Flächen zusammenwirkenden Gegenflächen anderseits eine Nockensteuerung wirksam werden muss, die eine vom Drehwinkel des Anschlags unabhängige, konstante Übersetzung zwischen dem Stellweg des Stelltriebs und dem Stellweg zur Begrenzung des Öffnungshubs sicherstellt. Zu diesem Zweck können die Kupplungsfläche und die Anschlagfläche mit den dem Stelltrieb und der Düsennadel zugeordneten Gegenflächen zusammenwirkende Nocken bilden, was jedoch nicht zwingend ist, weil auch die Gegenflächen Nockenflächen darstellen können. Es kommt ja nur darauf an, dass aufgrund der gegenseitigen Verlagerung der zusammenwirkenden Flächen der lineare Stellweg des Stelltriebs einen diesem direkt proportionalen Stellweg in Richtung der Düsennadelachse für die Begrenzung der Offenstellung der Düsennadel nach sich zieht, was aufgrund der geometrischen Abhängigkeiten über eine Nockensteuerung einfach zu verwirklichen ist.

Besonders einfache Handhabungsbedingungen ergeben sich, wenn die durch die Anschlagfläche und die Kupplungsfläche des Anschlags gebildete Nockensteuerung ein Übersetzungsverhältnis 1 zwischen dem Stellweg des Stelltriebs und der anschlagbedingten Verstellung des Öffnungshubs zur Begrenzung der Offenstellung der Düsennadel aufweist, sodass der Stellweg des Stelltriebs stets dem Weg der Verstellung des Öffnungshubs entspricht.

Voraussetzung für eine genaue Einstellung der Offenstellung der Düsennadel ist, dass der hierfür vorgesehene Stelltrieb spielfrei betätigt werden kann. Um diese Forderung mit einfachen konstruktiven Mitteln zu erfüllen, kann der Stelltrieb für den Anschlag einen federbelasteten Spindeltrieb umfassen, der sowohl von Hand als auch motorisch betätigt werden kann. Zur Überprüfung des Stellwegs des Stelltriebs für den Anschlag kann der Stelltrieb in vorteilhafter Weise an eine Messuhr angeschlossen werden, mit deren Hilfe die Verlagerung der Offenstellung der Düsennadel unmittelbar abgelesen werden kann.

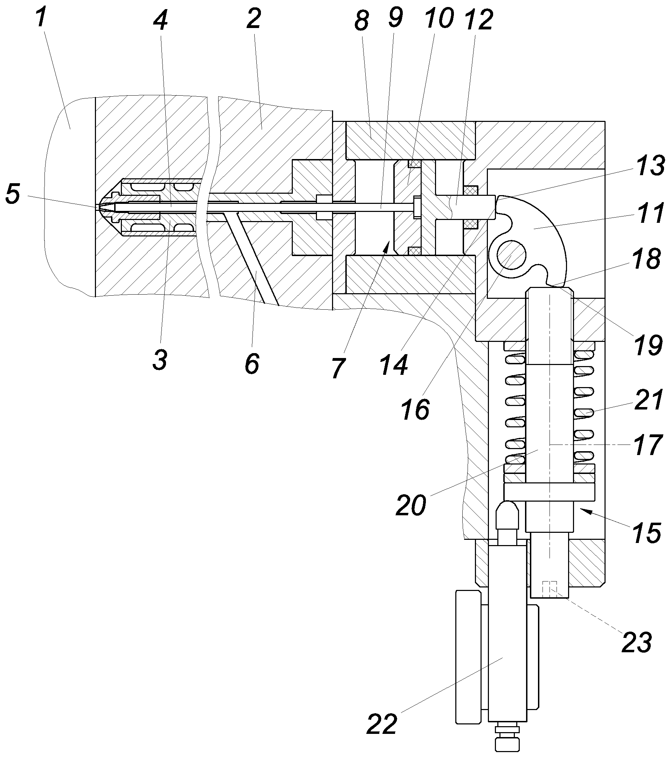

In der Zeichnung ist der Erfindungsgegenstand beispielsweise dargestellt, und zwar wird eine erfindungsgemäße Vorrichtung zum Einspritzen vernetzbarer Polymerer in einen Formraum ausschnittweise im Bereich einer Einspritzdüse in einem schematischen Schnitt entlang der Düsenachse gezeigt.

Die dargestellte Vorrichtung zum Einspritzen vernetzbarer Polymerer in einen Formraum 1 eines Spritzgusswerkzeugs 2 weist üblicherweise mehrere Einspritzdüsen auf, deren Düsenkörper 3 eine Düsennadel 4 aufnehmen, die in der Schließstellung eine in den Formraum 1 mündende Austrittsöffnung 5 verschließen, diese Austrittsöffnung 5 in der gezeichneten Offenstellung aber freigeben, sodass das über Verteilerkanäle 6 zugeführte Polymer in einer durch die Offenstellung der Düsennadel 4 vorgegebenen Einspritzrate in den Formraum 1 eingespritzt werden kann.

Zum Verstellen der Düsennadel 4 ist ein Betätigungstrieb 7 vorgesehen, der gemäß dem dargestellten Ausführungsbeispiel als Stellzylinder 8 ausgebildet ist, was jedoch nicht zwingend ist. Der Nadelschaft 9 wird im Sinne einer Kolbenstange mit dem Stellkolben 10 verbunden, der auf der dem Nadelschaft 9 abgekehrten Seite einen den Boden des Stellzylinders 8 durchsetzenden, mit einem Anschlag 11 zusammenwirkenden Stempel 12 trägt. Der Stempel 12 stützt sich an einer Anschlagfläche 13 des Anschlags 11 mit einer Gegenfläche 14 ab, sodass bei einer entsprechenden Beaufschlagung des Stellkolbens 10 der Öffnungshub der Düsennadel 4 durch den Anschlag 11 begrenzt wird.

Zur Einstellung der Begrenzung des Öffnungshubs kann der Anschlag 11 mittels eines Stelltriebs 15 verlagert werden. Zu diesem Zweck ist der Anschlag 11 um eine Achse 16 drehbar gelagert, die senkrecht zur Achse der Düsennadel 4 und senkrecht zur Stellachse 17 des Stelltriebs 15 verläuft. Da sich der Anschlag 11 mit einer Kupplungsfläche 18 an einer Gegenfläche 19 des Stelltriebs 15 abstützt, bedingt eine Verstellung des Stelltriebs 15 eine Drehung des Anschlags 11 um die Achse 16 und damit eine Drehverstellung der Anschlagfläche 13 für den Stempel 12 des Stellkolbens 10. Wegen der Drehbewegung des Anschlags 11 einerseits gegenüber dem linearen Stelltrieb 15 und anderseits gegenüber dem linear geführten Stempel 12 würde sich zwischen dem Stellweg des Stelltriebs 15 und dem durch die Anschlagverstellung bedingten Stellweg des Stempels 12 ein sich in Abhängigkeit vom Drehwinkel änderndes Übersetzungsverhältnis einstellen, wenn nicht aufgrund der Nockenform der Anschlagfläche 13 und der Kupplungsfläche 18 den Stellbewegungen eine Ausgleichsbewegung überlagert wird, die zu einer vom jeweiligen Drehwinkel des Anschlags 11 unabhängigen, konstanten und direkt proportionalen Übersetzung zwischen dem Stellweg des Stelltriebs 15 und dem dadurch bedingten Stellweg des Stempels 12 führt. Durch die die geometrischen Abhängigkeiten berücksichtigende Nockensteuerung zwischen der Kupplungsfläche 18 und der Gegenfläche 19 des Stelltriebs 15 und/oder zwischen der Anschlagfläche 13 und der Gegenfläche 14 des Stempels 12 wird somit erreicht, dass mithilfe des Stelltriebs 15 aufgrund der konstanten linearen Abhängigkeit der Stellwege der Öffnungshub für die Düsennadel 4 einfach und genau eingestellt werden kann, insbesondere dann, wenn zwischen den Stellwegen ein Übersetzungsverhältnis von 1 gewählt wird, weil in diesem Fall der Stellweg des Stelltriebs 15 dem anschlagbedingten Stellweg des Stempels 12 entspricht.

Voraussetzung ist ein spielfreier Stelltrieb 15. Wird der Stelltrieb 15 als Spindeltrieb 20 ausgeführt, der zur Spielvermeidung durch eine Feder 21 belastet wird, so werden einfache Konstruktionsverhältnisse mit einer genauen Anschlagverstellung unter Einhaltung enger Toleranzen für die Offenstellung der Düsennadel 4 verknüpft. Zur Ablesung der den Öffnungshub begrenzenden Anschlagstellung kann eine an den Stelltrieb 15 angeschlossene Messuhr 22 vorgesehen sein. Wird der Spindeltrieb 20 beispielsweise mit einem Inbus 23 versehen, so kann die jeweils geforderte Offenstellung der Düsennadel 4 mittels eines Inbusschlüssels anhand der Messuhr 22 in einfacher Art von Hand aus eingestellt werden.

## Patentansprüche

1. Vorrichtung zum Einspritzen vernetzbarer Polymere in einen Formraum (1) mit einem eine Austrittsöffnung (5) bildenden Düsenkörper (3), mit einer den Düsenkörper (3) durchsetzenden Düsennadel (4), die zwischen einer die Austrittsöffnung verschließenden Schließstellung und einer durch einen Anschlag (11) für den Öffnungshub begrenzten Offenstellung axial verlagerbar ist, und mit einem Stelltrieb (15) für den Anschlag (11) mit einer quer zur Achse der Düsennadel (4) verlaufenden Stellachse (17), **dadurch gekennzeichnet, dass** der Anschlag (11) um eine senkrecht zur Achse der Düsennadel (4) und senkrecht zur Stellachse (17) des Stelltriebs (15) verlaufende Drehachse (16) schwenkbar gelagert ist und neben einer Anschlagfläche (13) für den Öffnungshub eine winkelversetzte Kupplungsfläche (18) für den Stelltrieb (15) aufweist und dass die Anschlagfläche (13) und die Kupplungsfläche (18) des Anschlags (11) mit ihren jeweiligen Gegenflächen (14, 19) eine Nockensteuerung im Sinne eines vom Drehwinkel des Anschlags (11) unabhängigen, konstanten Übersetzungsverhältnisses zwischen dem Stellweg des Stelltriebs (15) und der anschlagbedingten Verstellung des Öffnungshubs zur Begrenzung der Offenstellung der Düsennadel (4) bilden.

2. Vorrichtung nach Anspruch 1, **dadurch gekennzeichnet, dass** die durch die Anschlagfläche (13) und die Kupplungsfläche (18) des Anschlags (11) gebildete Nockensteuerung ein Übersetzungsverhältnis 1 zwischen dem Stellweg des Stelltriebs (15) und der anschlagbedingten Verstellung des Öffnungshubs zur Begrenzung der Offenstellung der Düsennadel (4) aufweist.

3. Vorrichtung nach Anspruch 1 oder 2, **dadurch gekennzeichnet, dass** der Stelltrieb (15) für den Anschlag (11) einen federbelasteten Spindeltrieb (20) umfasst.

4. Vorrichtung nach einem der Ansprüche 1 bis 3, **dadurch gekennzeichnet, dass** der Stelltrieb (15) für den Anschlag (11) an eine Messuhr (22) angeschlossen ist.

## Claims

1. Device for injecting cross-linkable polymers into a moulding chamber (1) having a nozzle body (3) forming an outlet opening (5), having a nozzle needle (4) penetrating the nozzle body (3) and being axially displaceable between a closed position closing the outlet opening and an open position defined by a stop (11) for the opening stroke, and having an actuator (15) for the stop (11) with an adjusting axis (17) extending transversely to the axis of the nozzle needle (4), **characterised in that** the stop (11) is mounted to be able to pivot about an axis of rotation (16) extending perpendicularly to the axis of the nozzle needle (4) and perpendicularly to the adjusting axis (17) of the actuator (15), and, in addition to a stop surface (13) for the opening stroke, comprises an angularly offset coupling surface (18) for the actuator (15), and that the stop surface (13) and the coupling surface (18) of the stop (11) form, with their respective counter surfaces (14, 19), a cam control in the sense of a constant transmission ratio - independent of the rotational angle of the stop (11) - between the adjusting path of the actuator (15) and the stop-imposed adjustment of the opening stroke for limiting the open position of the nozzle needle (4).

2. Device as claimed in claim 1, **characterised in that** the cam control formed by the stop surface (13) and the coupling surface (18) of the stop (11) comprises a transmission ratio 1 between the adjusting path of the actuator (15) and the stop-imposed adjustment of the opening stroke for limiting the open position of the nozzle needle (4).

3. Device as claimed in claim 1 or 2, **characterised in that** the actuator (15) for the stop (11) comprises a spring-loaded spindle drive (20).

4. Device as claimed in any one of claims 1 to 3, **characterised in that** the actuator (15) for the stop (11) is attached to a gauge (22).

## Revendications

1. Dispositif servant à injecter des polymères réticulables dans un espace de moulage (1) comprenant un corps de buse (3) formant une ouverture de sortie (5), un pointeau de buse (4) traversant le corps de buse (3), lequel peut être déplacé de manière axiale entre une position de fermeture fermant l'ouverture de sortie et une position ouverte délimitée par une butée (11) pour la course d'ouverture et un mécanisme de réglage (15) pour la butée (11) comprenant un axe de réglage (17) s'étendant de manière transversale par rapport à l'axe du pointeau de buse (4), **caractérisé en ce que** la butée (11) est montée de manière à pouvoir tourner autour d'un axe de rotation (16) s'étendant de manière perpendiculaire par rapport à l'axe du (17) du mécanisme de réglage (15) et comporte, outre une surface de butée (13) pour la course d'ouverture, une surface de couplage (18) à décalage angulaire pour le mécanisme de réglage (15) et **en ce que** la surface de butée (13) et la surface de couplage (18) de la butée (11) forment, avec leurs contre-surfaces (14, 19) respectives, une commande de came au sens d'un rapport de démultiplication constant indépendant de l'angle de rotation de la butée (11) entre le trajet de réglage du mécanisme de réglage (15) et l'ajustement lié à la butée de la course d'ouverture afin de délimiter la position ouverte du pointeau de buse (4)

2. Dispositif selon la revendication 1, **caractérisé en ce que** la commande de came formée par la surface de butée (13) et la surface de couplage (18) de la butée (11) comporte un rapport de démultiplication 1 entre le trajet de réglage du mécanisme de réglage (15) et l'ajustement lié à la butée de la course d'ouverture afin de délimiter la position ouverte du pointeau de buse (4).

3. Dispositif selon la revendication 1 ou 2, **caractérisé en ce que** le mécanisme de réglage (15) pour la butée (11) comprend un dispositif d'entrainement de broche (20) contraint par ressort.

4. Dispositif selon l'une des revendications 1 à 3, **caractérisé en ce que** le mécanisme de réglage (15) pour la butée (11) est raccordé à un comparateur (22).
